# EUROPÄISCHE PATENTSCHRIFT

(11) **EP 3 193 150 B1**
(45) Veröffentlichungstag und Bekanntmachung des Hinweises auf die Patenterteilung: **25.12.2019**
(21) Anmeldenummer: 16002444.4
(22) Anmeldetag: 17.11.2016
(51) Int. Cl.: G01M 3/22, G01M 3/02

(54) **VERFAHREN UND VORRICHTUNG ZUR DURCHFÜHRUNG EINES INTEGRITÄTSTESTS AN EINEM FLEXIBLEN TESTBEHÄLTER**
METHOD AND DEVICE FOR CARRYING OUT AN INTEGRITY TEST ON A FLEXIBLE TEST CONTAINER
PROCÉDÉ ET DISPOSITIF D'EXÉCUTION D'UN ESSAI D'INTÉGRITÉ SUR UN RÉCIPIENT D'ESSAI SOUPLE

(30) Priorität: 15.01.2016 DE 102016000365
(43) Veröffentlichungstag der Anmeldung: 19.07.2017
(73) Patentinhaber: Sartorius Stedim Biotech GmbH, 37079 Göttingen (DE)
(72) Erfinder: Hogreve, Marc, 37139 Adelebsen (DE)
(74) Vertreter: Müller-Boré & Partner Patentanwälte PartG mbB

(56) Entgegenhaltungen:
- WO-A1-97/39322
- GB-A- 1 293 569
- JP-A- 2000 275 134
- US-A- 5 386 717

## Beschreibung

Die Erfindung betrifft ein Verfahren und eine Vorrichtung zur Durchführung eines Integritätstests an einem flexiblen Testbehälter.

Hermetisch verschlossene flexible Behälter wie z.B. Plastikbeutel werden insbesondere in der Bioprozessierung häufig verwendet. Bei vielen Anwendungen werden flexible Behältern zur Aufnahme von Zellkulturlösungen, Blutkonserven, Lösungen für Bioreaktoren, usw. verwendet. Insbesondere in der Bioprozessierung werden häufig sterilisierte Behälter verwendet, die während der Nutzung ihre Sterilität behalten sollen.

Um einen beschädigten und somit für einen sterilen Einsatz untauglichen Behälter erkennen zu können, kann der flexible Behälter vor der Verwendung einem Lecktest und/oder einem Integritätstest ausgesetzt werden. Dabei wird ein zu überprüfender, flexibler Testbehälter mit einem Prüfgas gefüllt und in einem verschließbaren Prüfbehälter angeordnet. In dem Prüfbehälter wird ein Vakuum erzeugt. Weist der Testbehälter ein Leck auf, so tritt das Prüfgas aufgrund des Druckunterschieds zwischen dem Testbehälter und dem Prüfbehälter durch das Leck aus dem Testbehälter aus und kann in dem Prüfbehälter detektiert werden.

Wird im Prüfbehälter kein Prüfgas detektiert, so besteht der Testbehälter den Lecktest und/oder Integritätstest. Wird im Prüfbehälter Prüfgas detektiert, so ist der Testbehälter ungeeignet zur Verwendung als steriler Behälter.

Dokument JP 2000 275134 A betrifft ein Verfahren, beim dem ein Integritätstest an einem Arbeitsgerät durchgeführt wird, das in einer Kammer angeordnet wird.

Zunächst wird das Arbeitsgerät zusammen mit der Kammer an eine Vakuumpumpe angeschlossen und entleert. Anschließend wird ein Prüfgas in das Arbeitsgerät eingefüllt und in der Kammer detektiert.

Dokument WO 97/39322 betrifft ein Verfahren für einen Lecktest. Dabei wird eine Verpackung in einer Kammer angeordnet. In der Kammer wird ein Gasdruck eingestellt, der etwas höher ist als der Druck in der Verpackung. In die Verpackung wird ein Prüfgas eingeführt und in der Kammer detektiert.

Dokument GB 1,293,569 betrifft ein Verfahren zum Nachweis von Leckstellen mittels Vakuum. Hierbei wird ein Handschuhkasten in einem Gefäß angeordnet, woraufhin sowohl der Handschuhkasten als auch das Gefäß evakuiert werden. Anschließend wird ein Detektorgas in das Gefäß eingebracht. Es wird untersucht, ob Detektorgas in den Handschuhkasten eindringt, in welchem ein noch niedrigerer Druck vorliegt als in dem Gefäß.

Der Erfindung liegt die Aufgabe zugrunde, die Durchführung eines Integritätstests an einem flexiblen Testbehälter zu verbessern.

Die Aufgabe wird durch die Gegenstände der unabhängigen Ansprüche gelöst. Die abhängigen Ansprüche betreffen bevorzugte Ausführungsformen.

Ein erster Aspekt betrifft ein Verfahren zur Durchführung eines Integritätstests an einem flexiblen Testbehälter, wobei
- der Testbehälter in einem fluiddicht verschließbaren Prüfbehälter angeordnet wird,
- ein Unterdruck im Innenraum des verschlossenen Prüfbehälters bereitgestellt wird,
- ein Prüffluid in den im Prüfbehälter angeordneten Testbehälter eingefüllt wird,
- der Innenraum des Prüfbehälters auf Vorhandensein von Prüffluid überprüft wird
- vor dem Einfüllen des Prüffluids in dem im Prüfbehälter angeordneten Testbehälter ein Unterdruck bereitgestellt wird,
- der Unterdruck im Testbehälter niedriger als der Unterdruck im Innenraum des verschlossenen Prüfbehälters ausgebildet ist und
- der Druckunterschied zwischen dem Unterdruck im Testbehälter und dem Unterdruck im Innenraum des verschlossenen Prüfbehälters mehr als 0 mbar beträgt und maximal 100 mbar beträgt.

Mit dem Verfahren kann die Integrität des Testbehälters überprüft werden, insbesondere kann ein Leck des Testbehälters detektiert werden. Als Testbehälter wird ein Testbehälter mit flexiblen Wänden verwendet, z.B. ein Plastikbeutel. Der Testbehälter kann an zumindest einer Stelle eine Öffnung aufweisen, über die das Prüffluid in den Testbehälter eingebracht werden kann. Dazu kann der Testbehälter an seiner Öffnung eine Kopplung zum Ankoppeln an eine Zuleitung aufweisen.

Zur Durchführung des Verfahrens wird der Testbehälter in dem fluiddicht verschließbaren Prüfbehälter angeordnet. Der Innenraum des Prüfbehälters ist dabei größer als der Testbehälter in auseinander gefalteter Form, so dass der Testbehälter ohne Faltenbildung vollständig in den Prüfbehälter eingebracht werden kann.

Alternativ kann der Testbehälter mit einer für das Prüffluid durchlässigen Stützvorrichtung im Testbehälter unterstützt und somit die vollständige Entfaltung verhindert werden. Der Prüfbehälter kann Wände aus einem formstabilen Material wie z.B. Metallwände aufweisen, die einem Hochvakuum standhalten. Der Prüfbehälter kann zur Aufnahme des Testbehälters geöffnet und anschließend wieder fluiddicht verschlossen werden. Der Prüfbehälter kann geeignete Dichtungen an seiner öffenbaren Stelle aufweisen.

Nach dem der Testbehälter im Innenraum des Prüfbehälters angeordnet ist, wird der Prüfbehälter wieder geschlossen und ein Unterdruck im Innenraum des Prüfbehälters erzeugt. Der Unterdruck kann sich dabei, insbesondere während eines Testzeitraums, in dem der Testbehälter mit dem Prüffluid beaufschlagt wird, auf ein Druckgefälle zwischen dem Innenraum des Prüfbehälters und dem mit Prüffluid gefüllten Testbehälter beziehen. Während dieses Testzeitraums kann der Druck im Innenraum des Prüfbehälters kleiner als der Druck im mit Prüffluid gefüllten Testbehälter sein. Der Unterdruck im Testbehälter und/oder im Prüfbehälter kann sich insbesondere auf einen Unterdruck gegenüber dem Atmosphärendruck beziehen.

Insbesondere kann der Unterdruck mittels einer Prüfbehälterpumpe bereitgestellt werden, die Luft aus dem geschlossenen Prüfbehälter absaugt. Die Prüfbehälterpumpe kann dazu über Leitungen mit dem Innenraum des Prüfbehälters verbunden sein. Somit kann der Unterdruck im Prüfbehälter z.B. durch ein Vakuum bereitgestellt werden, insbesondere durch ein Hochvakuum. Je stärker der Unterdruck gegenüber dem mit Prüffluid gefüllten Testbehälter ausgeprägt ist, desto sicherer kann ein Leck des Testbehälters detektiert werden.

Der Unterdruck im Prüfbehälter kann z.B. auf einen Wert zwischen 5E-2 mbar und 1E-1 mbar eingestellt werden

In den Testbehälter wird das Prüffluid gefüllt, während sich der Testbehälter im Prüfbehälter befindet. Das Prüffluid wird dabei bevorzugt in den Testbehälter eingefüllt, nachdem der Innenraum des Prüfbehälters in Unterdruck versetzt wurde. Das Prüffluid kann von einer Prüffluidquelle über eine Zuleitung in die Öffnung des Testbehälters geleitet werden. Die Prüffluidquelle selber kann dabei außerhalb oder innerhalb des Prüfbehälters angeordnet sein.

Der Begriff Prüffluid bezeichnet hierbei ein Prüfgas und/oder eine Prüfflüssigkeit. Das Prüffluid kann insbesondere als ein Prüfgas ausgebildet sein, das nicht oder nur in sehr geringer Form im normalen Luftgemisch vorkommt. Dadurch wird vermieden, dass durch die Detektion von Restluft im Prüfbehälter fälschlicherweise ein Leck des Testbehälters vermutet wird. Als Prüffluid kann z.B. Helium verwendet werden.

Der Testbehälter kann mit dem Prüffluid bis auf einen vorbestimmten und/oder vorbestimmbaren Testdruck gefüllt werden.

Weist der Testbehälter ein Leck auf, so tritt ein Teil des Prüffluids aufgrund des Druckunterschieds zwischen dem Innenraum des Prüfbehälters und dem mit Prüffluid gefüllten Testbehälter durch das Leck in den Innenraum des Prüfbehälters ein. Der Innenraum des Prüfbehälters wird auf ein Vorhandensein von Prüffluid überprüft. Dabei wird insbesondere überprüft, ob Prüffluid durch ein Leck des Testbehälters in den Innenraum des Prüfbehälters eingedrungen ist. So kann überprüft werden, ob und/oder wie stark eine Konzentration an Prüffluid im Prüfbehälter ansteigt. Bei dieser Überprüfung kann neben der absoluten Feststellung, ob überhaupt Prüffluid im Prüfbehälter vorhanden ist, weiterhin die Höhe der Konzentration an Prüffluid im Innenraum des Prüfbehälters z.B. in Abhängigkeit der verstrichenen Zeit bestimmt werden.

Wird ein Anstieg der Konzentration an Prüffluid im Innenraum des Prüfbehälters detektiert der einen vorbestimmten und/oder vorbestimmbaren Grenzwert übersteigt, so besteht der Testbehälter den Integritätstest nicht. Hierbei kann z.B. eine vorbestimmte, geringe Diffusion durch die flexiblen Wände des Testbehälters erlaubt sein, die zu einem geringen Anstieg der Konzentration an Prüffluid im Innenraum des Prüfbehälters führt. Übersteigt die Konzentration an Prüffluid im Innenraum der Prüfbehälters innerhalb eines vorbestimmten Zeitraums jedoch einen vorbestimmbaren und/oder vorbestimmten Grenzwert, so wird der Testbehälter als mangelhaft eingestuft. Je nach Auswertmethode kann auch der Verlauf der Konzentration von Prüffluid im Prüfbehälter bestimmt werden und mit einem bei unbeschädigten Testbehältern erwarteten Sollverlauf der Konzentration an Prüffluid verglichen werden.

Versuche haben gezeigt, dass es bei der Durchführung eines solchen Lecktests unter Umständen zu Beschädigungen des Testbehälters kommen kann. Insbesondere beim Bereitstellen des Unterdrucks im Prüfbehälter kann sich der flexible Testbehälter stark ausdehnen. Dabei kann eine Beschädigung des Testbehälters auftreten.

Während des Verfahrens wird jedoch vor dem Einfüllen des Prüffluids in dem im Prüfbehälter angeordneten Testbehälter ein Unterdruck bereitgestellt. Dadurch wird vermieden, dass der Testbehälter beim Bereitstellen des Unterdrucks im Prüfbehälter beschädigt wird. Der Unterdruck im Testbehälter wird dabei so eingestellt, dass er der Höhe nach dem Unterdruck im Prüfbehälter im Wesentlichen entsprechen kann. Der Unterdruck im Testbehälter wird jedoch durchgehend einige mbar (=Millibar) niedriger als der Unterdruck im Prüfbehälter ausgebildet, insbesondere zwischen 0 mbar und 100 mbar niedriger, bevorzugt zwischen 0 mbar und 20 mbar. Es besteht somit ein Druckunterschied zwischen dem Unterdruck im Innenraum des Testbehälters und dem Innenraum des Prüfbehälters. Dadurch kann ein Kollabieren des Testbehälters und somit ein potentieller Einschluss von Restluft verhindert werden. Hierbei bedeutet der Ausdruck, dass der Unterdruck im Testbehälter "niedriger" ist als der Unterdruck im Prüfbehälter, dass der absolute Druck im Testbehälter einige mbar (also zwischen 0 mbar und 100 mbar) größer ausgebildet ist als der absolute Druck im Prüfbehälter.

Der Druckunterschied kann z.B. im einstelligen mbar-Bereich ausgebildet sein, um einen mechanischen Stress auf den Testbehälter möglichst gering zu halten. Alternativ dazu kann der Druckunterschied zwischen dem Innenraum des Prüfbehälters und dem Innenraum des Testbehälters auch größer als 10 mbar ausgebildet sein, z.B. wenn der Prüfbehälter eine mechanische Unterstützung für den Testbehälter enthält. Der Druckunterschied kann in jedem der genannten Fälle kleiner als ein für den Testbehälter vorgesehener maximaler Testdruck ausgebildet sein.

Der Druckunterschied kann während des Bereitstellens der Unterdrücke so überwacht und/oder eingestellt werden, dass der Druckunterschied möglichst klein ist. Dabei ist der absolute Druck im Prüfbehälter niemals größer als der absolute Druck im Testbehälter ausgebildet. Höchstens der absolute Druck im Testbehälter darf um einige wenige mbar (z.B. zwischen 0 mbar und 100 mbar) größer ausgebildet sein als der absolute Druck im Prüfbehälter. Die beiden Drücke können in einer Ausführungsform allerdings zumindest zeitweilig gleich groß ausgebildet sein.

In einer alternativen Ausführungsform kann auch vorgesehen sein, dass während des Bereitstellens der Unterdrücke der absolute Druck im Testbehälter immer um einige wenige mbar größer ausgebildet sein muss als der absolute Druck im Prüfbehälter. Hierbei ist der Druckunterschied während des Bereitstellens der Unterdrücke durchgehend z.B. zwischen 0 mbar und 100 mbar, bevorzugt zwischen 0 mbar und 10 mbar groß ausgebildet.

Der Unterdruck im Testbehälter kann über eine Testbehälterpumpe bereitgestellt werden, die den Innenraum des Testbehälters über seine Testbehälteröffnung abpumpt. Der Unterdruck im Testbehälter kann sich auf einen Unterdruck gegenüber dem Atmosphärendruck beziehen.

Der Unterdruck im Testbehälter gegenüber dem Atmosphärendruck kann z.B. zumindest halb so stark ausgebildet sein wie der Unterdruck im Innenraum des Prüfbehälters gegenüber dem Atmosphärendruck, um das Beschädigungsrisiko des Testbehälters bei der Durchführung des Verfahrens bereits deutlich zu reduzieren.

Damit wird durch das Verfahren der Ausschuss an Testbehältern als Prüflinge reduziert. Bei Anlegung hoher Maßstäbe an die Sterilität der Testbehälter kann der Ausschuss relativ groß sein, weswegen eine Reduktion des Ausschusses einen deutlichen finanziellen Vorteil darstellt.

Während eines Testzeitraums, in dem der Testbehälter mit dem Prüffluid beaufschlagt wird, kann der absolute Druck im Innenraum des Prüfbehälters kleiner als der absolute Druck im mit Prüffluid gefüllten Testbehälter ausgebildet sein.

Gemäß einer Ausführungsform wird der Unterdruck im Testbehälter (z.B. unmittelbar) vor dem Einfüllen des Prüffluids in den Prüfbehälter so bereitgestellt, dass der Unterdruck im Testbehälter zwischen 0 mbar und 10 mbar, bevorzugt von 1 mbar bis 10 mbar, besonders bevorzugt von 1 mbar bis 5 mbar, niedriger ist als der Unterdruck, der im Prüfbehälter bereitgestellt wird. Hierbei wird ein mechanischer Stress auf den Testbehälter möglichst gering gehalten, wobei zugleich ein Kollabieren des Testbehälters verhindert wird.

Gemäß einer Ausführungsform wird der Unterdruck im Testbehälter bereitgestellt, bevor und/oder während der Unterdruck im Innenraum des Prüfbehälters bereitgestellt wird. Dadurch wird ein Aufblähen des Testbehälters während der Bereitstellung des Unterdrucks im Prüfbehälter vermieden. Insbesondere kann der Unterdruck im Testbehälter zumindest teilweise zeitgleich mit dem Unterdruck im Prüfbehälter bereitgestellt werden, wodurch die Belastung des Testbehälters besonders stark reduziert wird. In anderen Worten kann gleichzeitig ein Unterdruck im Innenraum des verschlossenen Prüfbehälters und dem im Prüfbehälter angeordneten Testbehälter bereitgestellt werden.

Gemäß einer Ausführungsform werden der Unterdruck im Testbehälter und der Unterdruck im Innenraum des Prüfbehälters im Wesentlichen gleichzeitig bereitgestellt, wobei während der Bereitstellung der beiden Unterdrücke der Unterdruck im Testbehälter durchgehend zwischen 0 mbar und 100 mbar, bevorzugt zwischen 0 mbar und 10 mbar, niedriger als der Unterdruck im Innenraum des verschlossenen Prüfbehälters ausgebildet ist. Hierbei wird während des gesamten Zeitraums, in dem die Unterdrücke ausgebildet werden, ein Kollabieren des Testbehälters verhindert und zugleich ein unbeabsichtiger Lufteinschluss vermieden.

Gemäß einer Ausführungsform wird während des Bereitstellens der Unterdrücke im Testbehälter und im Prüfbehälter die Höhe des Unterdrucks im Testbehälter auf die Höhe des Unterdrucks im Prüfbehälter abgestimmt. Hierbei können z.B. beide Unterdrücke aktiv überwacht und/oder angesteuert werden, beide Unterdrücke über eine gemeinsame Vakuumpumpe erzeugt werden, und/oder während des Abpumpens ein Verbindungsventil zwischen den beiden Innenräumen geöffnet werden. Insbesondere kann hierbei ein Einhalten einer Druckunterschiedsobergrenze zwischen dem Druck im Innenraum des Prüfbehälters und dem Druck im Innenraum des Testbehälters vorgesehen und bereitgestellt werden. So kann diese Druckunterschiedsobergrenze z.B. so vorgesehen und/oder ausgebildet sein, dass der absolute Druck im Innenraum des Testbehälters maximal 10 mbar oder maximal 5 mbar höher als der absolute Druck im Innenraum des Prüfbehälters ausgebildet sein darf.

Weiterhin kann ein Einhalten einer Druckunterschiedsuntergrenze zwischen dem Druck im Innenraum des Prüfbehälters und dem Druck im Innenraum des Testbehälters vorgesehen und/oder bereitgestellt werden. So kann diese Druckunterschiedsuntergrenze z.B. so vorgesehen und/oder ausgebildet sein, dass der absolute Druck im Innenraum des Testbehälters mindestens 0 mbar oder 1 mbar höher als der absolute Druck im Innenraum des Prüfbehälters ausgebildet sein muss.

Hierbei kann der besagte Druckunterschied zumindest bis zum Beginn des Einfüllens des Prüffluids überwacht, eingestellt und/oder angesteuert werden. Auch nach dem Befüllen des Testbehälters mit dem Prüffluid, also während der eigentlichen Testmessungen, können die Drücke im Testbehälter und im Prüfbehälter weiterhin aufeinander abgestimmt werden.

Gemäß einer Weiterbildung dieser Ausführungsform erfolgt während des Bereitstellens der Unterdrücke im Testbehälter und im Prüfbehälter ein z.B. kurzzeitiger Druckausgleich zwischen dem Innenraum des Testbehälters und dem Innenraum des Prüfbehälters. Dies kann z.B. über ein zeitlich begrenztes Öffnen eines Trennventils zwischen den beiden genannten Innenräumen erfolgen. Durch den z.B. kurzzeitigen Druckausgleich wird ein schädlich hoher Druckunterschied zwischen den beiden genannten Innenräumen vermieden. Hierbei kann sichergestellt werden, dass keine Einschlüsse von Restluft im Testbehälter verbleiben. Solange der Druck zumindest ausgeglichen ist, kann dies automatisch erfolgen, da durch eingeschlossene Restluft zumindest eine marginale Druckerhöhung im Inneren des Testbehälters stattfindet die das Kollabieren des Testbehälters verhindert. Durch einen solchen kurzzeitigen Druckausgleich kann zumindest ein mittlerer Druckunterschied zwischen 0 mbar und 100 mbar, oder z.B. zwischen 0 mbar und 100 mbar eingestellt werden.

Die Abstimmung zwischen dem Unterdruck im Innenraum des Testbehälters und dem Unterdruck im Innenraum des Prüfbehälters kann durch eine Abstimmung zwischen einer Prüfbehälterpumpe zum Abpumpen des Innenraums des verschlossenen Prüfbehälters und einer Testbehälterpumpe zum Abpumpen des Innenraums des Testbehälters erfolgen. So kann z.B. während des Betriebs zumindest eine der beiden genannten Pumpen so angesteuert werden, dass die Unterdrücke in den beiden Innenräumen aufeinander abgestimmt werden. Die Abstimmung kann anhand der in den vorangegangenen Abschnitten beschriebenen Abhängigkeiten zwischen den Drücken im Innenraum des Prüfbehälters und des Testbehälters erfolgen. Die Ansteuerung der zumindest einen Pumpe kann ein Drosseln, zeitweises Abschalten, und/oder ein Verstärken der Pumpleistung beinhalten.

Alternativ oder zusätzlich kann ein z.B. kurzzeitiger Druckausgleich mittels eines Trennventils erfolgen. Das Trennventil ist dabei so angeordnet, dass es den Innenraum des Prüfbehälters vom Innenraum des Testbehälters trennt. Das Trennventil kann dabei in einer entsprechenden Verbindungsleitung angeordnet sein. Das Trennventil ist ansteuerbar und kann geöffnet und geschlossen werden.

Hierbei kann insbesondere ein pulsierender Druckausgleich erfolgen, bei dem das Trennventil abwechselnd geöffnet und geschlossen wird. Das Trennventil kann also z.B. wiederholt und/oder kurzzeitig geöffnet werden, um den gewünschten und/oder vorbestimmten Druckunterschied zwischen Prüfbehälter und Testbehälter (zumindest gemittelt über die Zeit) einzustellen, ohne einen vollständigen Druckausgleich zwischen den beiden Behältern einzustellen. Hierbei kann somit zumindest gemittelt über die Zeit während eines Zeitraums, in dem die beiden Unterdrücke in den beiden Behältern bereitgestellt werden bis hin zum Einfüllen des Prüffluids, ein mittlerer Druckunterschied zwischen den beiden Behältern bereitgestellt werden, der dem voranstehend beschriebenen gewünschten und/oder vorbestimmten Druckunterschied entspricht. Dabei kann ein Restlufteinschluss reduziert und/oder vermeiden werden.

Gemäß einer Ausführungsform wird im Testbehälter und im Prüfbehälter ein im Wesentlichen gleich hoher Unterdruck bereitgestellt, der jedoch im Testbehälter durchgehend einige wenige mbar (z.B. zwischen 0 mbar und 100 mbar) niedriger sein kann, um ein Kollabieren des Testbehälters und somit potentielle Einschlüsse von Restluft zu verhindern.

Gemäß einer Ausführungsform wird das Prüffluid aus einer vorgespannten Prüffluidquelle in den Testbehälter eingefüllt. Hierbei kann durch das Entspannen des Prüffluids in den Testbehälter der Testdruck nahezu unverzüglich hergestellt werden. Dies ist besonders vorteilhaft bei Nutzung von Prüfgasen wie z.B. Helium, die sehr kleine Atom- oder Molekülgrößen aufweisen und deshalb sehr schnell durch die Wandung des Testbehälters 1 permeieren. Mit der Hauptmessung kann hierbei deswegen sehr schnell begonnen werden.

Gemäß einer Ausführungsform wird das Verfahren vorzeitig abgebrochen und der Testbehälter als defekt bewertet, sobald die Konzentration an Prüffluid im Prüfbehälter eine vorbestimmte Leckgrenze übersteigt. Hierbei kann das Verfahren bereits vor Ablauf einer eigentlich angesetzten Testzeit abgebrochen werden, um eine erhöhte Kontamination des Prüfbehälters mit dem Prüffluid zu vermeiden, wobei zugleich dabei Zeit und Prüffluid eingespart werden können. Der vorzeitige Abbruch kann alternativ oder zusätzlich auch aufgrund einer Druckdifferenzmessung erfolgen. Generell kann im Vorfeld des Tests oder begleitend eine Druckdifferenzmessung für einen Groblecktest durchgeführt werden.

Gemäß einer Ausführungsform wird im Prüfbehälter eine Hintergrundkonzentration an Prüffluid erhöht, wenn eine Hintergrundleckrate im Prüfbehälter eine vorbestimmte Leckgrenze unterschreitet. Das Erhöhen der Hintergrundkonzentration im Prüfbehälter kann als zusätzlicher Verfahrensschritt in das Verfahren eingeschoben werden, falls die Hintergrundleckrate im Prüfbehälter die vorbestimmte Leckgrenze unterschreitet. In diesem zusätzlichen Verfahrensschritt wird die Hintergrundkonzentration an Prüffluid im Prüfbehälter erhöht. Dies kann die benötigte Zeit zum Erreichen von Startbedingungen verkürzen, und somit die Durchführung des Verfahrens.

Gemäß einer Ausführungsform wird der Unterdruck im Testbehälter über eine Zuleitung bereitgestellt, über die auch das Prüffluid in den Testbehälter eingefüllt wird. Hierbei wird zumindest der Zuleitungsteil, der anschließend an den Testbehälter angeordnet ist, für zwei Zwecke benutzt. Die Zuleitung kann an die Öffnung des Testbehälters gekoppelt sein und eine Aufspaltung zu einer Testbehälterpumpe zum Bereitstellen des Unterdrucks einerseits und zu einer Prüffluidquelle zum Einfüllen des Prüffluids andererseits aufweisen. Die Testbehälterpumpe und/oder die Prüffluidquelle kann/können dabei außerhalb des Prüfbehälters angeordnet sein. Zur Steuerung können einzeln ansteuerbare Ventile für die einzelnen Leitungsabschnitte vorgesehen sein. Durch die Nutzung derselben Zuleitung zum Testbehälter wird die Anzahl der insgesamt benötigten Zuleitungen möglichst klein gehalten.

Gemäß einer Ausführungsform wird der Innenraum des Prüfbehälters gespült, nachdem im Prüfbehälter Prüffluid detektiert wurde. Ist ein Prüfling, also ein Testbehälter, mangelhaft, so tritt während des Testverfahrens Prüffluid aus dem Testbehälter in den Innenraum des Prüfbehälters ein. Um Beschädigungen des Prüfbehälters durch Kontamination mit dem Prüffluid zu vermeiden, wird dieser nach einem mangelhaft getesteten Testbehälter durch Spülung gereinigt. Nach dem Test eines integeren Testbehälters ist eine Spülung nicht unbedingt erforderlich und kann eingespart werden. Somit kann der Innenraum des Prüfbehälters insbesondere lediglich nach jedem Test gespült werden, bei dem ein Testbehälter als mangelhaft eingestuft wurde.

Gemäß einer Ausführungsform wird eine Hintergrundkonzentration an Prüffluid im Prüfbehälter eingestellt. Unter Umständen kann das Bereitstellen des Unterdrucks im Prüfbehälter lange dauern, insbesondere bei Auftreten von Ausgasungen aus dem Testbehälter. In diesem Fall kann auch die Hintergrundleckrate stark absinken. Obwohl dies grundsätzlich eher positiv für die Durchführung des Integritätstest ist, kann dadurch aber der dynamische Anstieg der Leckrate zum Beginn der Messung verändert werden. Je nach Auswertmethode des Integritätstests kann es deswegen vorteilhaft sein, wenn die Hintergrundleckrate zu Beginn der Messung in einem vordefinierten Bereich und/oder Fenster ist. Falls dieser vordefinierte Bereich unterschritten sein sollte, kann z.B. Prüffluid in den Prüfbehälter eingebracht werden. Dadurch wird die Hintergrundkonzentration an Prüffluid im Prüfbehälter vor Beginn der Messung zur Überprüfung der Integrität des Testbehälters aktiv eingestellt.

Ein zweiter Aspekt betrifft eine Testvorrichtung zur Durchführung eines Integritätstests an einem flexiblen Testbehälter, mit einem fluiddicht verschließbaren Prüfbehälter, in dem der Testbehälter anordenbar ist, einer Prüfbehälterpumpe zum Abpumpen des Innenraums des verschlossenen Prüfbehälters, einer Prüffluidquelle, aus der ein Prüffluid in den im Prüfbehälter angeordneten Testbehälter einfüllbar ist, einem Prüffluiddetektor zum Detektieren von Prüffluid im Innenraum des Prüfbehälters und einen Pumpanschluss, über den der Innenraum des in dem Prüfbehälter angeordneten Testbehälters so abpumpbar ist, dass der Unterdruck im Testbehälter niedriger als der Unterdruck im Innenraum des verschlossenen Prüfbehälters ausgebildet ist, wobei der Druckunterschied zwischen dem Unterdruck im Testbehälter und dem Unterdruck im Innenraum des verschlossenen Prüfbehälters mehr als 0 mbar beträgt und maximal 100 mbar beträgt.

Die Prüffluidquelle kann als ein Prüffluidbehälter ausgebildet sein, der einen Vorrat an Püffluid aufweist, das über eine Zuleitung in den Testbehälter einfüllbar ist. Die Prüffluidquelle kann insbesondere außerhalb des Prüfbehälters angeordnet sein und lediglich über eine Zuleitung durch eine Wand des Prüfbehälters mit dem Innenraum des Prüfbehälters verbunden sein. Im Prüfbehälter kann eine Öffnung des Testbehälters an einen Zuleitungsanschluss dieser Zuleitung angekoppelbar sein.

Der Pumpanschluss kann im Innen- und/oder Außenraum des Prüfbehälters angeordnet und dazu ausgebildet und vorgesehen sein, an eine Öffnung des Testbehälters angeschlossen zu werden. Dazu kann der Pumpanschluss eine geeignete Kopplung aufweisen. Über den Pumpanschluss ist der Innenraum des Testbehälters mit einer Testbehälterpumpe verbindbar, über die ein Unterdruck im Innenraum des Testbehälters bereitstellbar ist. Bevorzugt ist die Testbehälterpumpe außerhalb des Prüfbehälters angeordnet, wodurch eine kompakte Dimensionierung des Prüfbehälters ermöglicht wird.

Der Pumpanschluss kann als ein Zuleitungsanschluss ausgebildet sein, so dass der Innenraum des Testbehälters über einen doppelfunktionalen Anschluss und/oder eine doppelfunktionale Zuleitung sowohl abgepumpt werden kann, als auch später mit dem Prüffluid gefüllt werden kann. Die Testvorrichtung kann ein oder mehrere Ventil(e) aufweisen, über die eine Zuleitung von der Prüfbehälterpumpe zum Innenraum des Prüfbehälters, eine Zuleitung von der Testbehälterpumpe zum Innenraum des Testbehälters, eine Zuleitung von der Prüffluidquelle zum Innenraum des Testbehälters usw. steuerbar und/oder kontrollierbar sind.

Die Testvorrichtung kann weiterhin eine Steuerung zum Ansteuern der Ventile und/oder Pumpen der Testvorrichtung aufweisen. Die Steuerung kann einen Computerprozessor aufweisen. Die Steuerung kann insbesondere zur Überwachung, zum Einstellen und/oder zum Ansteuern des Druckunterschieds zwischen dem Testbehälter und dem Prüfbehälter ausgebildet sein und/oder verwendet werden.

Die Testvorrichtung ermöglicht insbesondere, dass gleichzeitig ein Unterdruck im Prüfbehälter und im Testbehälter bereitgestellt werden kann, der im Testbehälter durchgehend einige wenige mbar (z.B. zwischen 0 mbar und 100 mbar oder zwischen 0 mbar und 10 mbar) niedriger sein kann, um das Kollabieren des Testbehälters zu verhindern.

In einer Ausführungsform weist die Testvorrichtung ein Trennventil zwischen dem Innenraum des Testbehälters und dem Innenraum des Prüfbehälters auf. Über das Trennventil kann ein Druckausgleich erfolgen, was eine Belastung des Testbehälters bei unterschiedlich starker Ausbildung der Unterdrücke reduziert.

Ggf. vorhandene Restlufteinschlüsse in einem kollabierten Testbehälter können zu einem marginalen Druckunterschied führen, der zur vollkommenen Evakuierung des Testbehälters führen kann.

Ein dritter Aspekt betrifft die Verwendung der Testvorrichtung gemäß dem zweiten Aspekt zur Durchführung eines Integritätstests an einem flexiblen Testbehälter gemäß dem Verfahren nach dem ersten Aspekt.

Die Erfindung wird nachfolgend anhand von in Figuren dargestellten Ausführungsbeispielen näher erläutert. Einzelne, in den Figuren dargestellte Aspekte der Ausführungsformen können mit anderen Ausführungsformen kombiniert werden. Es zeigen:
- Figur 1: eine schematische Darstellung einer ersten Testvorrichtung zur Durchführung eines Integritätstests an einem flexiblen Testbehälter;
- Figur 2: eine schematische Darstellung einer zweiten Testvorrichtung zur Durchführung eines Integritätstests an einem flexiblen Testbehälter;
- Figur 3: ein Flussdiagram eines ersten Verfahrens zur Durchführung eines Integritätstests an einem flexiblen Testbehälter;
- Figur 4: ein Flussdiagram eines zweiten Verfahrens zur Durchführung eines Integritätstests an einem flexiblen Testbehälter und
- Figur 5: ein Diagramm eines Zeitverlaufs der erwarteten Konzentrationen von Prüffluid im Prüfbehälter von dichten und defekt geprüften Testbehältern.

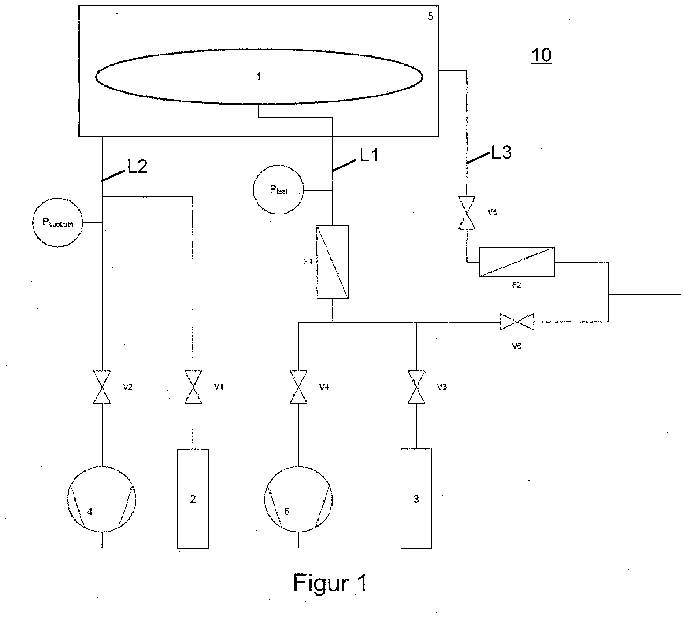

**Figur 1** zeigt eine schematische Darstellung einer ersten Testvorrichtung 10 zur Durchführung eines Integritätstests an einem flexiblen Testbehälter 1.

Die Testvorrichtung 10 weist einen Prüfbehälter 5 auf, der öffenbar und fluiddicht verschließbar ausgebildet ist. Der Prüfbehälter 5 kann formstabil ausgebildet sein und z.B. Metall- und/oder Kunststoffwände aufweisen. Der Prüfbehälter 5 ist dazu ausgebildet und vorgesehen, einem Unterdruck, insbesondere einem Vakuum, in seinem Innenraum standzuhalten. Eine (in Figur 1 nicht gezeigte) Öffnung des Prüfbehälters 5 kann Dichtungen aufweisen, um einen fluiddichten Verschluss zu gewährleisten.

Im Prüfbehälter 5 ist der flexible Testbehälter 1 entnehmbar angeordnet. Der Prüfbehälter 5 kann eine mechanische Unterstützung, insbesondere eine auf den Testbehälter 1 abgestimmte Auflagefläche, aufweisen, auf die der Testbehälter 1 im Wesentlichen faltenfrei auflegbar ist. Die mechanische Unterstützung kann aus einem porösen Material ausgebildet sein, wodurch ein Blockieren einer Leckage des Testbehälters durch die Unterstützung verhindert werden kann.

Der zu testende flexible Testbehälter 1 kann als einzelner Behälter ausgebildet sein, oder als eine Anordnung mehrerer Behälter, die z.B. durch Schläuche miteinander verbunden sind. Der Testbehälter 1 ist zumindest teilweise flexibel ausgebildet.

Der Testbehälter 1 weist eine Öffnung auf, die an eine Testbehälterzuleitung L1 angekoppelt ist. Über die Testbehälterzuleitung L1 können dem Innenraum des Testbehälters 1 Fluide zugeführt oder aus ihm abgepumpt werden. Die Testbehälterzuleitung L1 führt durch eine Öffnung in der Prüfbehälterwand des Prüfbehälters 5 in den Außenraum des Prüfbehälters 5.

Der Innenraum des Prüfbehälters 5 ist an zwei Zuleitungen angeschlossen, nämlich an eine Prüfbehälterzuleitung L2 und an eine Belüftungsleitung L3. Über die Prüfbehälterzuleitung L2 und ein Prüfbehälterpumpventil V2 ist der Innenraum des Prüfbehälters 5 mit einer Prüfbehälterpumpe 4 verbindbar. Weiterhin ist der Innenraum des Prüfbehälters 5 über die Prüfbehälterzuleitung L2 und ein Detektorventil V1 mit einem Prüffluiddetektor 2 verbindbar. Der für das verwendete Prüffluid taugliche Prüffluiddetektor 2 dient zur Detektion des aus dem Testbehälter 1 austretenden Prüffluids im Falle einer Leckage im Testbehälter 1.

Der Prüffluiddetektor 2 ist dazu ausgebildet und vorgesehen, die Konzentration eines vorbestimmten Prüffluids im Innenraum des Prüfbehälters 5 zu detektieren.

Die Prüfbehälterpumpe 4 kann als Hochvakuumpumpe ausgebildet sein, die den Innenraum des Prüfbehälters 5 auf ein Hochvakuum mit einem Druck von maximal 10⁻³ mbar evakuieren kann, z.B. um eine sehr geringe Hintergrundleckrate im Prüfbehälter 5 bereitzustellen. Eine geringe Hintergrundleckrate ermöglicht eine schnelle Messung. Je kleiner die Hintergrundleckrate im Prüfbehälter 5 ausgebildet ist, desto deutlicher ist das dynamische Verhalten der Leckrate durch den Testbehälter 1 im Falle eines Defekts des Testbehälters 1 am Anfang der Messung ausgeprägt. Ein solcher dynamischer Anstieg der Konzentration an Prüffluid im Innenraum des Prüfbehälters 5, insbesondere bevor eine Permeation durch Seitenwände des Testbehälters 1 auftritt, kann zur Erkennung einer Leckage im Testbehälter 1 ausgewertet werden.

In der Testbehälterzuleitung L1 ist ein Testbehälterfilter F1 angeordnet, das als ein Partikelfilter ausgebildet ist und ein Durchströmen von Partikeln durch die Testbehälterzuleitung L1 hemmt.

Über die Testbehälterzuleitung L1 und ein Testbehälterpumpventil V4 ist der Innenraum des Testbehälters 1 mit einer Testbehälterpumpe 6 verbindbar, die einen Unterdruck, insbesondere ein Vakuum, im Testbehälter 1 erzeugen kann.

Die Testbehälterpumpe 6 ist dazu ausgebildet und vorgesehen, zeitgleich zu der Evakuierung des Prüfbehälters 5 die Evakuierung des Testbehälters 1 zu bewirken, womit ein zu starker Überdruck im Testbehälter 1 und somit eine Beschädigung vermieden werden kann. Hierbei kann die Testbehälterpumpe 6 so angesteuert werden, dass der Druck im Testbehälter 1 durchgehend einige wenige mbar (z.B. zwischen 0 mbar und 100 mbar) höher ausgebildet ist als im Prüfbehälter, um das Kollabieren des Testbehälters und somit potentielle Einschlüsse von Restluft zu verhindern. Am Ende der Prüfung kann die Testbehälterpumpe 6 benutzt werden, um das Prüffluid wieder aus dem Testbehälter 1 zu evakuieren.

Weiterhin ist der Innenraum des Testbehälters 1 über die Testbehälterzuleitung L1 und ein Prüffluidventil V3 mit einer Prüffluidquelle 3 verbindbar. Auf diesem Weg ist der Testbehälter 1 mit einem Prüffluid füllbar, insbesondere einem Prüfgas wie einem Edelgas. Dafür ist ein Vorrat an Prüffluid in der Prüffluidquelle 3 angeordnet. Die Prüffluidquelle 3 kann als ein Vorratsbehälter ausgebildet sein. Das Prüffluid in der Prüffluidquelle 3 kann unter einem vorbestimmten und/oder vorbestimmbaren Testdruck vorgespannt sein, um durch das Entspannen des Prüffluids in den Testbehälter 1 den Testdruck nahezu unverzüglich herzustellen. Dies ist besonders vorteilhaft bei Nutzung von Prüfgasen wie z.B. Helium, die sehr kleine Atom- oder Molekülgrößen aufweisen und deshalb sehr schnell durch die Wandung des Testbehälters 1 permeieren. Mit der Hauptmessung kann deshalb möglichst schnell begonnen werden.

Der Innenraum des Prüfbehälters 5 kann über die Entlüftungsleitung L3 entlüftet werden. Die Entlüftung ist über ein in der Entlüftungsleitung L3 angeordnetes Prüfbehälterentlüftungsventil V5 ansteuerbar. In der Entlüftungsleitung ist weiterhin ein Prüfbehälterfilter F2 angeordnet, das als ein Partikelfilter ausgebildet sein kann.

Über ein Testbehälterentlüftungsventil V6 und die Testbehälterzuleitung L1 ist auch der Innenraum des Testbehälters 1 entlüftbar.

Die in Figur 1 gezeigte Testvorrichtung 10 dient zur Durchführung eines Integritätstests an dem flexiblen Testbehälter 1. Der Testbehälter 1 ist dabei austauschbar und kein Bestandteil der Testvorrichtung 10. Die Testvorrichtung 10 kann vielmehr wiederholt verwendet werden zur Überprüfung einer Mehrzahl von unterschiedlichen flexiblen Testbehältern.

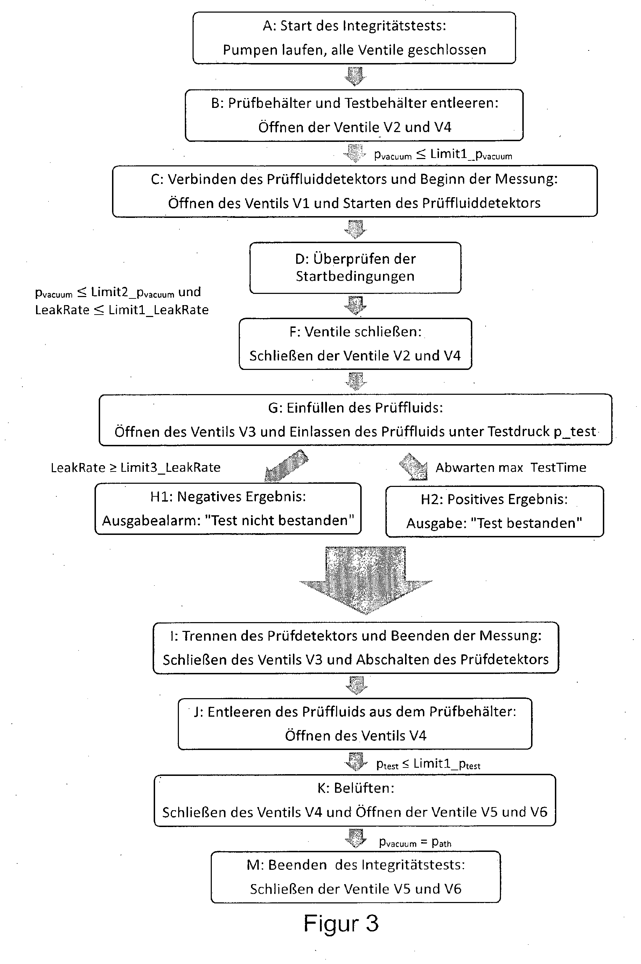

Der Ablauf des entsprechenden Testverfahrens ist in einem schematischen Ablaufdiagramm in **Figur 3** gezeigt. In diesem Ablaufdiagramm sind einzelne Verfahrensschritte eines Verfahrens zur Durchführung eines Integritätstests an einem flexiblen Testbehälter angegeben, die im Ablaufdiagramm der Figur 3 zur Steuerung der in Figur 1 gezeigten Testvorrichtung 10 gezeigt sind.

Mit Verfahrensschritt A beginnt der Integritätstest. Zu Beginn laufen alle Pumpen der Testvorrichtung, insbesondere die Prüfbehäiterpumpe 4 und die Testbehälterpumpe 6. Weiterhin sind zu Beginn des Verfahrens alle Ventile der Testvorrichtung 10 geschlossen.

In Verfahrensschritt B wird sowohl der Prüfbehälter 5 als auch der Testbehälter 1 entleert, genauer wird in diesen beiden Behältern jeweils ein Unterdruck gegenüber dem Atmosphärendruck bereitgestellt, z.B. ein Hochvakuum. Dies erfolgt durch ein Öffnen des Prüfbehälterpumpventils V2 und des Testbehälterpumpventils V4, wodurch die beiden Pumpen 4 und 6 zugeschalten werden. Die Evakuierung des Testbehälters 1 erfolgt parallel zur Evakuierung des Prüfbehälters 5. Dabei kann im Testbehälter 1 durchgehend ein etwas schwächerer Unterdruck als im Prüfbehälter 5 ausgebildet werden, um das Kollabieren des Testbehälters 5 und somit potentielle Einschlüsse von Restluft zu verhindern.

Ist ein vorbestimmter und/oder vorbestimmbarer Unterdruck als Vakuumdruck p_{vacuum} im Prüfbehälter erreicht, wird im Verfahrensschritt C der Prüffluiddetektor 2 über das Detektorventil V1 zugeschalten. Dies erfolgt, wenn der Vakuumdruck im Prüfbehälter 5 kleiner gleich einer vorbestimmten und/oder vorbestimmbaren ersten Druckgrenze Limit1_p_{vacuum} ist. p_{vacuum} bezeichnet dabei den Druck im Prüfbehälter 5. Im Verfahrensschritt C beginnt eine Aufzeichnung einer Hintergrundleckrate durch eine Vormessung der Konzentration an Prüffluid im Innenraum des Prüfbehälters 5. Die erste Druckgrenze Limit1_p_{vacuum} kann abhängig vom Arbeitsdruck des Prüffluiddetektors 2 vorbestimmt werden. Die Messung der Konzentration an Prüffluid im Prüfbehälter 5 beginnt als Vormessung der Hintergrundleckrate, auch als Hintergrundkonzentration bezeichnet, bereits vor der eigentlichen Hauptmessung.

Im Verfahrensschritt D wird ein Einhalten der Startbedingungen für die Hauptmessung überprüft. Dabei kann insbesondere überprüft werden, ob der vorbestimmte Unterdruck, insbesondere ein vorbestimmtes Hochvakuum, im Prüfbehälter erreicht ist, also ob p_{vacuum} ≤ Limit2_p_{vacuum} gilt, wobei Limit2_p_{vacuum} eine zweite Druckgrenze als zulässige Mindestgrenze für den Druck im Innenraum des Prüfbehälters definiert. Weiterhin kann überprüft werden, ob eine maximal zulässige Hintergrundleckrate unterschritten wird, nämlich ob LeakRate ≤ Limit1_LeakRate gilt, wobei LeakRate die tatsächlich gemessene Hintergrundleckrate im Prüfbehälter 5 bezeichnet und Limit1_LeakRate eine erste zulässige Leckgrenze für die Hintergrundleckrate.

Sind alle Startbedingungen erfüllt, so werden in Verfahrensschritt F die Ventile V2 und V4 geschlossen, um den Beginn der Leckprüfung mit der Hauptmessung zu ermöglichen.

Während des Verfahrensschritts G wird das Prüffluid in den Testbehälter 1 eingefüllt. Dabei wird der Testbehälter 1 durch Öffnen des Testbehälterventils V3 mit Prüffluid befüllt und auf einen vorbestimmten und/oder vorbestimmbaren Testdruck p_test gebracht. Dies kann im Bruchteil einer Sekunde erfolgen, z.B. durch ein geeignetes Verhältnis von Druck zu Volumen zwischen dem Testbehälter 1 und der vorgespannten Prüffluidquelle 3. Diese Art von Befüllung, also eine Druckbefüllung mit vorgespanntem Pfüffluid aus der Prüffluidquelle, ermöglicht einen sehr schnellen Beginn der Hauptmessung bevor die Permeation eintritt. Der Anstieg der Hintergrundleckrate im Falle eines Defekts am Testbehälter 1 erfolgt nahezu sofort, der Anstieg durch Permeation etwas zeitverzögert. Diese Verzögerung hängt vom gewählten Prüffluid und dem Barriereverhalten der Testbehälterwandung ab.

Mit dem Verfahrensschritt H beginnt die eigentliche Hauptmessung. In Verfahrensschritt H erfolgt eine Bewertung des Testbehälters 1. Nach Ablauf einer vorbestimmten und/oder vorbestimmbaren Testzeit TestTime ohne Überschreitung einer dritten Leckgrenze wird der Testbehälter 1 als dicht bewertet (Verfahrensschritt H2). Wird die dritte Leckgrenze Limit3_LeakRate im Prüfbehälter 5 überschritten, so wird der Testbehälter 1 als defekt bewertet (Verfahrensschritt H1). Hierbei kann das Verfahren bereits vor Ablauf der Testzeit abgebrochen werden, um eine erhöhte Kontamination des Prüfbehälters 5 zu vermeiden.

In Verfahrensschritt I wird der Prüffluiddetektor 2 abgekoppelt und die Hauptmessung gestoppt. Der Prüffluiddetektor 2 wird durch ein Schließen des Detektorventils V3 abgekoppelt, was die Messung beendet.

Anschließend wird in Verfahrensschritt J das Prüffluid evakuiert. Dabei wird das Prüffluid durch Öffnen des Testbehälterpumpenventils V4 aus dem Testbehälter 1 evakuiert.

Ist durch die Evakuierung ein vorbestimmter und/oder vorbestimmbarer Testbehälterdruck pₜₑₛₜ im Testbehälter 1 unterschritten (und die Bedingung pₜₑₛₜ ≤ Limit1_pₜₑₛₜ erfüllt, wobei Limit1_ptest eine Druckgrenze des Testbehälterdrucks definiert) und somit nahezu das komplette Testgas evakuiert, erfolgt in Verfahrensschritt K eine Belüftung der Testvorrichtung 10. Dabei wird das Testbehälterpumpenventil V4 geschlossen und das komplette System der Testvorrichtung, also der Prüfbehälterkreis und der Testbehälterkreis, durch Öffnen der Ventile V5 und V6 bis auf Atmosphärendruck belüftet.

Nachdem der Prüfbehälterdruck p_{vacuum} den Atmosphärendruck pₐₜₕ erreicht hat, werden die Ventile V5 und V6 geschlossen und die Testvorrichtung 10 in Verfahrensschritt M in die Ausgangsposition versetzt.

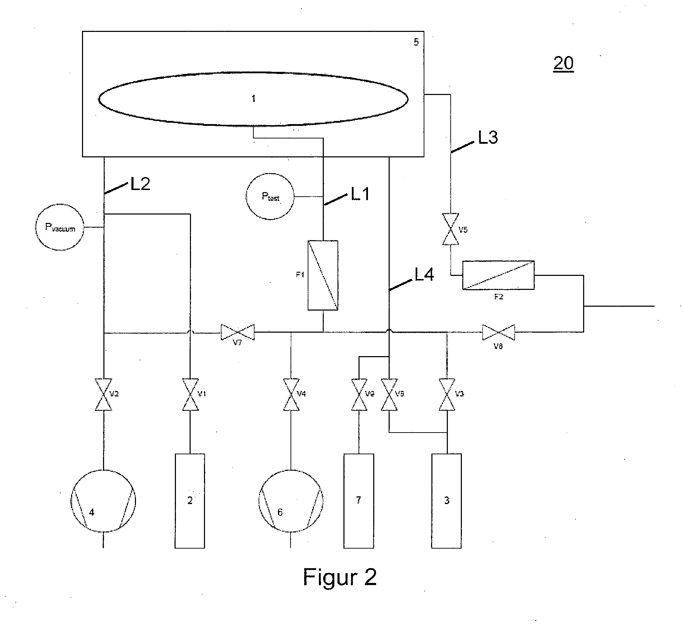

**Figur 2** zeigt eine schematische Darstellung einer zweiten Testvorrichtung 20 zur Durchführung eines Integritätstests an einem flexiblen Testbehälter 1.

Die zweite Testvorrichtung 20 weist alle Bestandteile der ersten Testvorrichtung 10 auf. Die einander entsprechenden Bestandteile der beiden Testvorrichtungen weisen gleiche Bezugszeichen auf.

Die zweite Testvorrichtung 20 weist einige zusätzliche Bestandteile auf, die unterschiedliche und voneinander unabhängige Zusatzfunktionen der zweiten Testvorrichtung 20 im Vergleich mit der ersten Testvorrichtung 10 bereitstellen.

Eine erste Zusatzfunktion wird durch eine Spülfluidquelle 7 bereitgestellt. In der Spülfluidquelle 7 ist ein vorgespanntes Spülfluid angeordnet, mit dem eine durch Permeation oder Defekt aufgetretene Kontamination des Prüfbehälters durch das Prüffluid abgespült werden kann.

Aus der Spülfluidquelle 7 ist das Spülfluid über ein Spülventil V9 und eine Spülleitung L4 in den Innenraum des Prüfbehälters 5 einbringbar. Damit ermöglichen die Bauteile Spülfluidquelle 7, Spülventil V9 und Spülleitung L4 eine Spülfunktion als erste Zusatzfunktion. Die Spülung erfolgt über die Spülleitung V4, durch den Prüfbehälter 2, wobei das vorhandene Prüffluid sowie das Spülfluid über die Leitungen L2 und L3 durch die geöffneten Belüftungsventile V5 und V6 und das Trennventil V7 aus dem Prüfbehälter 2 gespült werden.

Alternativ zur Verbindung über die Spülleitung L4 könnte die Spülfluidquelle 7 über das Spülventil V9 auch an eine andere Leitung gekoppelt sein, z.B. mit der Prüfbehälterzuleitung L2. Das vorhandene Prüffluid sowie das Spülfluid würden in dieser Ausführungsform über die Leitung L3 durch das geöffnete Prüfbehälterbelüftungsventile V5 aus dem Prüfbehälter 2 gespült werden. Dabei kann das Trennventil V7 geschlossen sein, um einen definierten Spülkreislauf durch den Prüfbehälter 2 zu bereitzustellen.

Eine zweite Zusatzfunktion der zweiten Testvorrichtung 20 wird mittels eines zusätzlichen Anschlusses der Prüffluidquelle 3 über ein Prüffluideinlassventil V8 in den Innenraum des Prüfbehälters 5 bereitgestellt. In der in Fig. 2 gezeigten Ausführungsform erfolgt eine Ankopplung über die Spülleitung L4, alternativ könnte die Ankopplung auch über eine der anderen Zuleitungen oder eine weitere zusätzliche Zuleitung erfolgen.

Die zweite Zusatzfunktion ermöglicht ein Einstellen einer Hintergrundkonzentration (und somit auch Hintergrundleckrate) an Prüffluid im Innenraum des Prüfbehälters 5, was u.U. den Beginn des Prüfvorgangs beschleunigen kann.

Eine über ein Trennventil V7 ansteuerbare Verbindung zwischen der Testbehälterzuleitung L1 und der Prüfbehälterzuleitung L2 ermöglicht einen zumindest kurzzeitigen Druckausgleich zwischen dem Testbehälter 1 und dem Prüfbehälter 5 als dritte Zusatzfunktion. Ggf. vorhandene Restlufteinschlüsse in einem kollabierten Testbehälter 1 können zu einem marginalen Druckunterschied gegenüber dem Prüfbehälter 5 und somit zur vollkommenen Evakuierung des Testbehälters 1 führen. Durch den zumindest kurzzeitigen Druckausgleich wird der Druckunterschied zwischen Testbehälter und Prüfbehälter möglichst gering gehalten.

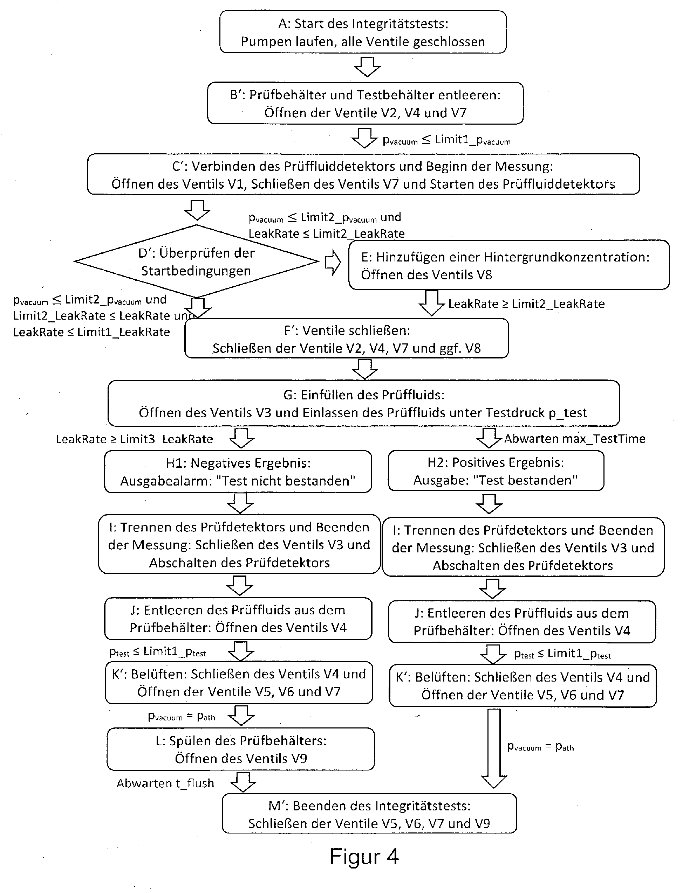

Die in Figur 2 gezeigte Testvorrichtung 20 dient zur wiederholbaren Durchführung eines Integritätstests an einem flexiblen, austauschbaren Testbehälter 1. Der Ablauf des entsprechenden Testverfahrens zur Steuerung der zweiten Testvorrichtung 20 ist in einem schematischen Ablaufdiagramm in **Figur 4** gezeigt. Die einzelnen Verfahrensschritte zur Steuerung der zweiten Testvorrichtung 20 entsprechen im Wesentlichen den in Fig. 3 gezeigten Verfahrensschritten. Die drei Zusatzfunktionen der zweiten Testvorrichtung 20 ermöglichen allerdings die Durchführung einiger zusätzliche Verfahrensschritte und die Erweiterung einiger der oben beschriebenen Verfahrensschritte.

Nachfolgend werden lediglich die zusätzlichen bzw. abgeänderten Verfahrensschritte im Vergleich mit den zuvor beschriebenen Verfahrensschritten beschrieben. Die abgeänderten Verfahrensschritte sind dabei durch einen Strich (wie z.B. B' im Vergleich zu B) gekennzeichnet, die zusätzlichen Verfahrensschritte sind durch einen neuen Buchstaben (hier Verfahrensschritte E und L) gekennzeichnet.

So wird in Verfahrensschritt B' beim Entleeren des Prüfbehälters 5 und des Testbehälters 1 zusätzlich über das Trennventils V7 der Prüfbehälterkreis und der Testbehälterkreis kurz geschlossen, um einen Überdruck im Testbehälter 1 und somit eine evtl. Beschädigung zu vermeiden. Durch Öffnen des Trennventils V7 erfolgt somit ein zumindest kurzzeitiger Druckausgleich zwischen dem Innenraum des Testbehälters 1 und dem Innenraum des Prüfbehälters 5. Damit wird in den beiden Behältern im Wesentlichen ein gleich hoher Unterdruck bereitgestellt, wobei der absolute Druck im Testbehälter marginal größer als der absolute Druck im Prüfbehälter sein kann, z.B. zwischen 0 mbar und 100 mbar oder zwischen 0 mbar und 10 mbar größer. Ggf. vorhandene Restlufteinschlüsse in einem kollabierten Testbehälter 1 können zu einem marginalen Druckunterschied gegenüber dem Prüfbehälter 5 und somit zur vollkommenen Evakuierung des Testbehälters 1 führen.

In Verfahrensschritt C' wird zusätzlich das Trennventil V7 geschlossen, wodurch die beiden Kreise voneinander getrennt werden.

In Verfahrensschritt D', also beim Überprüfen der Startbedingungen, erfolgt eine abgestimmtere Reaktion auf unterschiedliche Messergebnisse bei der Vormessung, also vor Beginn der Hauptmessung. Unter Umständen kann es vorkommen, dass die Evakuierung auf den Unterdruck im Prüfbehälter 5, insbesondere auf ein Hochvakuum, sehr lange dauert (z.B. durch Ausgasungen aus dem Testbehälter 1). In diesem Fall kann auch die Hintergrundleckrate im Prüfbehälter 5 sehr stark absinken. Obwohl dies grundsätzlich für die Messung nicht negativ ist, wird dadurch aber auch der dynamische Anstieg der Hintergrundleckrate zum Beginn der Hauptmessung verändert. Je nach Methode der Auswertung kann es also vorteilhaft sein, dass sich die Hintergrundleckrate zum Start der Hauptmessung in einem definierten Fenster befindet. Sollte dieses Fenster unterschritten sein kann entsprechend Prüffluid in den Prüfbehälter 5 eingebracht werden.

Somit wird, wenn die Hintergrundleckrate LeakRate eine zweite Leckgrenze Limit2_LeakRate unterschreitet, ein Verfahrensschritt E zwischengeschoben. In Verfahrensschritt E wird die Hintergrundkonzentration an Prüffluid im Prüfbehälter 5 erhöht. Dazu wird das Prüffluideinlassventil V8 geöffnet, bis auch die Startbedingung LeakRate ≥ Limit2_LeakRate erfüllt ist.

In Verfahrensschritt F' wird zusätzlich auch das Trennventil V7 und ggf. das Prüffluideinlassventil V8 geschlossen, um eine Bereitschaft zur Hauptmessung und Leckprüfung bereitzustellen.

Die Verfahrensschritte G, H, I und J entsprechen den oben beschriebenen Verfahrensschritten.

Bei der Belüftung in Verfahrensschritt K' kann jedoch zusätzlich das Trennventil V7 geöffnet werden, um eine gründlichere und schnellere Belüftung zu ermöglichen.

Im Falle einer negativen Prüflingsbewertung im Verfahrensschritt H1 und der damit einher gehenden Kontamination des Prüfbehälters 5 erfolgt ein zusätzliches Spülen im Verfahrensschritt L. Dabei wird durch das Öffnen des Spülventils V9 der komplette Prüfbehälterkreis über die geöffneten Ventile V5, V7 und V6 und die Leitungen L2, L4 und L3 gespült.

Entsprechend werden beim Beenden des Verfahrens in Verfahrensschritt M' zusätzlich die Ventile V7 und V9 geschlossen.

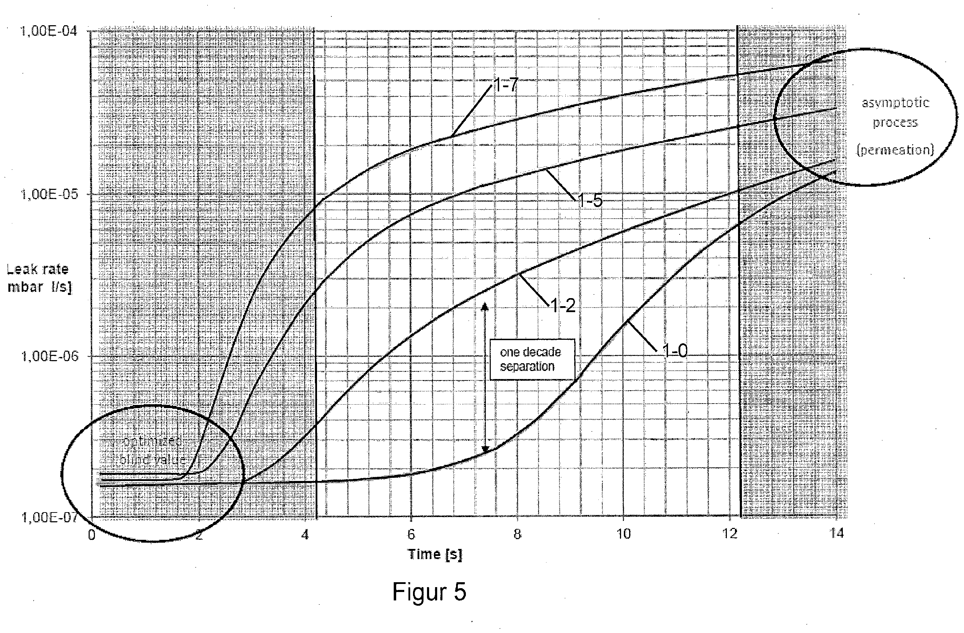

**Figur 5** zeigt in einem Diagramm mehrere Zeitverläufe der erwarteten Konzentration von Prüffluid im Prüfbehälter für vier unterschiedliche Testbehälter.

Ein erster Zeitverlauf 1-0 zeigt die zu erwartende Konzentration ("Leak rate in mbar*l pro s") von Helium als Prüfgas eines unbeschädigten Testbehälters. Die Hauptmessung beginnt nach ca. 4 Sekunden, während derer die Konzentration von der Hintergrundleckrate unter 2*10⁻⁷ mbar*l/s auf ca. 6*10⁻⁶ mbar*l/s nach ca. 12 Sekunden (entspricht max_TestTime) langsam ansteigt.

Ein zweiter Zeitverlauf 1-2 zeigt die zu erwartende Konzentration von Helium als Prüfgas eines Testbehälters mit einem Leck von ca. 2 µm Durchmesser. Hierbei steigt die Konzentration bereits vor Beginn der eigentlichen Hauptmessung (also vor Verfahrensschritt H, bereits während Verfahrensschritt G) über die Hintergrundleckrate auf ca. 4*10⁻⁷ mbar*l/s nach ca. 4 Sekunden an. Im Laufe der Prüfzeit während der Hauptmessung steigt die Konzentration auf ca. 1*10⁻⁵ mbar*l/s nach ca. 12 Sekunden an.

Ein dritter Zeitverlauf 1-5 zeigt die zu erwartende Konzentration von Helium als Prüfgas eines Testbehälters mit einem Leck von ca. 5 µm Durchmesser. Auch hierbei steigt die Konzentration bereits vor Beginn der Hauptmessung über die Hintergrundleckrate auf ca. 2,3*10⁻⁶ mbar*l/s nach ca. 4 Sekunden an. Im Laufe der Prüfzeit steigt die Konzentration auf ca. 2,3*10⁻⁵ mbar*l/s nach ca. 12 Sekunden an.

Ein vierter Zeitverlauf 1-7 zeigt die zu erwartende Konzentration von Helium als Prüfgas eines Testbehälters mit einem Leck von ca. 7 µm Durchmesser. Hierbei steigt die Konzentration vor Beginn der Hauptmessung über die Hintergrundleckrate auf ca. 8*10⁻⁶ mbar*l/s nach ca. 4 Sekunden an. Im Laufe der Prüfzeit steigt die Konzentration auf ca. 5*10⁻⁵ mbar*l/s nach ca. 12 Sekunden an.

Die Hauptmessung könnte auch bereits zum Zeitpunkt t=0 s beginnen. Der Bereich zwischen t=4 s und t=12 s ist in dem gezeigten Ausführungsbeispiel ein vorbestimmter Prüfzeitbereich, während dessen eine sichere Differenzierung zwischen defekten und defektfreien Testbehältern möglich ist.

Je nach Auswertemethode kann bei einem fehlerhaften Testbehälter als Prüfling die Messung unter Umständen schon vor Ablauf der vollen Testzeit beendet werden, z.B. wenn neben dem Absolutwert auch ein Verlauf der Konzentration detektiert wird.

### Bezugszeichenliste

- 1: Testbehälter
- 2: Prüffluiddetektor
- 3: Prüffluidquelle
- 4: Prüfbehälterpumpe
- 5: Prüfbehälter
- 6: Testbehälterpumpe
- 7: Spülfluidquelle
- 10: erste Testvorrichtung
- 20: zweite Testvorrichtung

- F1: Testbehälterfilter
- F2: Prüfbehälterfilter

- L1: Testbehälterzuleitung
- L2: Prüfbehälterzuleitung
- L3: Belüftungsleitung
- L4: Spülleitung

- V1: Detektorventil
- V2: Prüfbehälterpumpenventil
- V3: Prüffluidventil
- V4: Testbehälterpumpenventil
- V5: Prüfbehälterbelüftungsventil
- V6: Testbehälterbelüftungsventil
- V7: Trennventil
- V8: Prüffluideinlassventil
- V9: Spülventil

- pₜₑₛₜ: Testbehälterdruck
- p_{vacuum}: Prüfbehälterdruck

## Patentansprüche

1. Verfahren zur Durchführung eines Integritätstests an einem flexiblen Testbehälter (1), wobei
- der Testbehälter (1) in einem fluiddicht verschließbaren Prüfbehälter (5) angeordnet wird,
- ein Unterdruck im Innenraum des verschlossenen Prüfbehälters (5) bereitgestellt wird,
- ein Prüffluid in den im Prüfbehälter (5) angeordneten Testbehälter (1) eingefüllt wird,
- im Innenraum des Prüfbehälters (5) vorhandenes Prüffluid detektiert wird
- vor dem Einfüllen des Prüffluids in dem im Prüfbehälter (5) angeordneten Testbehälter (1) ein Unterdruck bereitgestellt wird,
das Verfahren **dadurch gekennzeichnet, dass** der Unterdruck im Testbehälter (1) niedriger als der Unterdruck im Innenraum des verschlossenen Prüfbehälters (5) ausgebildet ist und
der Druckunterschied zwischen dem Unterdruck im Testbehälter (1) und dem Unterdruck im Innenraum des verschlossenen Prüfbehälters (5) mehr als 0 mbar beträgt und maximal 100 mbar beträgt.

2. Verfahren nach Anspruch 1, wobei der Unterdruck im Testbehälter (1) vor dem Einfüllen des Prüffluids in den Prüfbehälter (5) so bereitgestellt wird, dass der Unterdruck im Testbehälter (1) zwischen 0 mbar und 10 mbar niedriger ist als der Unterdruck, der im Prüfbehälter (5) bereitgestellt wird.

3. Verfahren nach Anspruch 1 oder 2, wobei der Unterdruck im Testbehälter (1) bereitgestellt wird, bevor und/oder während der Unterdruck im Innenraum des Prüfbehälters (5) bereitgestellt wird.

4. Verfahren nach einem der vorangegangenen Ansprüche, wobei der Unterdruck im Testbehälter (1) und der Unterdruck im Innenraum des Prüfbehälters (5) im Wesentlichen gleichzeitig bereitgestellt werden, wobei während der Bereitstellung der beiden Unterdrücke der Unterdruck im Testbehälter (1) durchgehend niedriger als der Unterdruck im Innenraum des verschlossenen Prüfbehälters (5) ausgebildet ist.

5. Verfahren nach einem der vorangegangenen Ansprüche, wobei während des Bereitstellens der Unterdrücke im Testbehälter (1) und im Prüfbehälter (5) die Höhe des Unterdrucks im Testbehälter (1) auf die Höhe des Unterdrucks im Prüfbehälter (5) abgestimmt wird.

6. Verfahren nach Anspruch 5, wobei während des Bereitstellens der Unterdrücke im Testbehälter (1) und im Prüfbehälter (5) ein zumindest kurzzeitiger Druckausgleich zwischen dem Innenraum des Testbehälters (1) und dem Innenraum des Prüfbehälters (5) erfolgt.

7. Verfahren nach Anspruch 5 oder 6, wobei der die Abstimmung zwischen dem Unterdruck im Innenraum des Testbehälters (1) und dem Unterdruck im Innenraum des Prüfbehälters (5) durch
- eine Abstimmung zwischen einer Prüfbehälterpumpe (4) zum Abpumpen des Innenraums des verschlossenen Prüfbehälters (5) und einer Testbehälterpumpe (6) zum Abpumpen des Innenraums des Testbehälters (1) und/oder
- mittels eines Trennventils (V7) erfolgt.

8. Verfahren nach einem der vorangegangenen Ansprüche, wobei das Prüffluid aus einer vorgespannten Prüffluidquelle (3) in den Testbehälter (1) eingefüllt wird.

9. Verfahren nach einem der vorangegangenen Ansprüche, wobei das Verfahren vorzeitig abgebrochen wird und der Testbehälter (1) als defekt bewertet wird, sobald die Konzentration an Prüffluid im Prüfbehälter (5) eine vorbestimmte Leckgrenze (Limit3_LeakRate) übersteigt.

10. Verfahren nach einem der vorangegangenen Ansprüche, wobei im Prüfbehälter (5) eine Hintergrundkonzentration an Prüffluid erhöht wird, wenn eine Hintergrundleckrate (LeakRate) im Prüfbehälter (5) eine vorbestimmte Leckgrenze (Limit2_LeakRate) unterschreitet.

11. Verfahren nach einem der vorangegangenen Ansprüche, wobei der Unterdruck im Testbehälter (1) über eine Zuleitung (L1) bereitgestellt wird, über die auch das Prüffluid in den Testbehälter (1) eingefüllt wird.

12. Verfahren nach einem der vorangegangenen Ansprüche, wobei der Innenraum des Prüfbehälters (5) gespült wird, nachdem im Prüfbehälter (5) Prüffluid detektiert wurde.

13. Verfahren nach einem der vorangegangenen Ansprüche, wobei eine Hintergrundkonzentration an Prüffluid im Prüfbehälter (5) eingestellt wird.

14. Testvorrichtung (10; 20) zur Durchführung der Schritte des Verfahrens nach Anspruch 1, mit
- einem fluiddicht verschließbaren Prüfbehälter (5), in dem der Testbehälter (1) anordenbar ist,
- einer Prüfbehälterpumpe (4) zum Abpumpen des Innenraums des verschlossenen Prüfbehälters (5),
- einer Prüffluidquelle (3), aus der ein Prüffluid in den im Prüfbehälter (5) angeordneten Testbehälter (1) einfüllbar ist,
- einem Prüffluiddetektor (2) zum Detektieren von Prüffluid im Innenraum des Prüfbehälters (5) und
- einen Pumpanschluss, über den der Innenraum des in dem Prüfbehälter (5) angeordneten Testbehälters (1) so abpumpbar ist, dass der Unterdruck im Testbehälter (1) niedriger als der Unterdruck im Innenraum des verschlossenen Prüfbehälters (5) ausgebildet ist, wobei der Druckunterschied zwischen dem Unterdruck im Testbehälter (1) und dem Unterdruck im Innenraum des verschlossenen Prüfbehälters (5) mehr als 0 mbar beträgt und maximal 100 mbar beträgt.

15. Testvorrichtung (10; 20) nach Anspruch 14 mit einem Trennventil (V7) zwischen dem Innenraum des Testbehälters (1) und dem Innenraum des Prüfbehälters (5).

16. Verwendung der Testvorrichtung (10; 20) nach Anspruch 14 oder 15 zur Durchführung eines Integritätstests an einem flexiblen Testbehälter (1) gemäß dem Verfahren nach einem der Ansprüche 1 bis 13.

## Claims

1. A method for carrying out an integrity test on a flexible test container (1), wherein:
- the test container (1) is arranged in an analysis container (5) that can be sealed fluid-tight,
- an underpressure is provided in the interior of the sealed analysis container (5),
- a test fluid is added to the test container (1) arranged in the analysis container (5),
- available test fluid is detected within the interior of the analysis container (5),
- before the test fluid is added, an underpressure is provided in the test container (1) arranged in the analysis container (5),
the method is **characterized in that**
the underpressure in the test container (1) is formed to be lower than the underpressure in the interior of the sealed analysis container (5), and
the difference in pressure between the underpressure in the test container (1) and the underpressure in the interior of the sealed analysis container (5) is more than 0 mbar, and is a maximum of 100 mbar.

2. The method according to claim 1, wherein the underpressure in the test container (1) is provided before the test fluid is added to the analysis container (5) so that the underpressure in the test container (1) is between 0 mbar and 10 mbar less than the underpressure that is provided in the analysis container (5).

3. The method according to claim 1 or 2, wherein the underpressure in the test container (1) is provided before and/or while the underpressure is being provided in the interior of the analysis container (5).

4. The method according to one of the preceding claims, wherein the underpressure in the test container (1) and the underpressure in the interior of the analysis container (5) are provided substantially at the same time, wherein while the two underpressures are being provided, the underpressure in the test container (1) is always formed to be lower than the underpressure in the interior of the sealed analysis container (5).

5. The method according to one of the preceding claims, wherein while the underpressures are being provided in the test container (1) and in the analysis container (5), the level of the underpressure in the test container (1) is matched to the level of the underpressure in the analysis container (5).

6. The method according to claim 5, wherein while the underpressures are being provided in the test container (1) and in the analysis container (5), there is an at least brief pressure compensation between the interior of the test container (1) and the interior of the analysis container (5).

7. The method according to claim 5 or 6, wherein the underpressure in the interior of the test container (1) and the underpressure in the interior of the analysis container (5) are harmonized by:
- harmonizing an analysis container pump (4) for pumping out the interior of the sealed analysis container (5) and a test container pump (6) for pumping out the interior of the test container (1), and/or
- by means of an isolation valve (V7).

8. The method according to one of the preceding claims, wherein the test fluid is added to the test container (1) from a pre-pressurized test fluid source (3).

9. The method according to one of the preceding claims, wherein the method is terminated prematurely, and the test container (1) is considered to be defective once the concentration of test fluid in the analysis container (5) exceeds a pre-determined leak limit (Limit3_LeakRate).

10. The method according to one of the preceding claims, wherein a background concentration of test fluid is increased in the analysis container (5) when a background leak rate (LeakRate) in the analysis container (5) falls below a predetermined leak limit (Limit2_LeakRate).

11. The method according to one of the preceding claims, wherein the underpressure in the test container (1) is provided through a feed line (L1) by means of which the test fluid is also added to the test container (1).

12. The method according to one of the preceding claims, wherein the interior of the analysis container (5) is rinsed after test fluid has been detected in the analysis container (5).

13. The method according to one of the preceding claims, wherein a background concentration of test fluid is adjusted in the analysis container (5).

14. A test device (10; 20) for performing the steps of the method according to claim 1, comprising:
- an analysis container (5) that can be sealed fluid-tight in which the test container (1) can be arranged,
- an analysis container pump (4) for pumping out the interior of the sealed analysis container (5),
- a test fluid source (3) from which a test fluid can be added to the test container (1) arranged in the analysis container (5),
- a test fluid detector (2) for detecting test fluid in the interior of the analysis container (5), and
- a pump connection by means of which the interior of the test container (1) arranged in the analysis container (5) can be pumped out such that the underpressure in the test container (1) is formed to be lower than the underpressure in the interior of the sealed analysis container (5), wherein the difference in pressure between the underpressure in the test container (1) and the underpressure in the interior of the sealed analysis container (5) is more than 0 mbar, and is a maximum of 100 mbar.

15. The test device (10; 20) according to claim 14 with an isolation valve (V7) between the interior of the test container (1) and the interior of the analysis container (5).

16. The use of the test device (10; 20) according to claim 14 or 15 for performing an integrity test on a flexible test container (1) according to the method according to one of claims 1 to 13.

## Revendications

1. Procédé d'exécution d'un essai d'intégrité sur un récipient d'essai souple (1), dans lequel
- le récipient d'essai (1) est disposé dans une enceinte d'essai (5) pouvant être fermée de manière à être étanche aux fluides,
- une dépression est fournie dans l'espace intérieur de l'enceinte d'essai (5) fermée,
- un fluide d'essai est rempli dans le récipient d'essai (1) disposé à l'intérieur de l'enceinte d'essai (5),
- du fluide d'essai présent dans l'espace intérieur de l'enceinte d'essai (5) est détecté,
- une dépression est fournie dans le récipient d'essai (1) disposé à l'intérieur de l'enceinte d'essai (5) avant le remplissage du fluide d'essai,
le procédé étant **caractérisé en ce que**
la dépression dans le récipient d'essai (1) est conçue de manière à être inférieure à la dépression dans l'espace intérieur de l'enceinte d'essai (5) fermée et
**que** la différence de pression entre la dépression dans le récipient d'essai (1) et la dépression dans l'espace intérieur de l'enceinte d'essai (5) fermée s'élève à plus de 0 millibar et atteint au maximum 100 millibars.

2. Procédé selon la revendication 1, dans lequel la dépression dans le récipient d'essai (1) est fournie avant le remplissage du fluide d'essai dans l'enceinte d'essai (5), de sorte que la dépression dans le récipient d'essai (1) est inférieure d'une valeur comprise entre 0 millibar et 10 millibars à la dépression qui est fournie dans l'enceinte d'essai (5).

3. Procédé selon la revendication 1 ou 2, dans lequel la dépression est fournie dans le récipient d'essai (1), avant et/ou pendant que la dépression est fournie dans l'espace intérieur de l'enceinte d'essai (5).

4. Procédé selon l'une des revendications précédentes, dans lequel la dépression dans le récipient d'essai (1) et la dépression dans l'espace intérieur de l'enceinte d'essai (5) sont fournies sensiblement en même temps, dans lequel la dépression dans le récipient d'essai (1) est conçue de manière à être continuellement inférieure à la dépression dans l'espace intérieur de l'enceinte d'essai (5) fermée durant l'établissement des deux dépressions.

5. Procédé selon l'une des revendications précédentes, dans lequel le niveau de la dépression dans le récipient d'essai (1) est adapté au niveau de la dépression dans l'enceinte d'essai (5) durant l'établissement des dépressions dans le récipient d'essai (1) et dans l'enceinte d'essai (5).

6. Procédé selon la revendication 5, dans lequel une compensation de pression au moins brève entre l'espace intérieur du récipient d'essai (1) et l'espace intérieur de l'enceinte d'essai (5) se déroule durant l'établissement des dépressions dans le récipient d'essai (1) et dans l'enceinte d'essai (5).

7. Procédé selon la revendication 5 ou 6, dans lequel le réglage entre la dépression dans l'espace intérieur du récipient d'essai (1) et la dépression dans l'espace intérieur de l'enceinte d'essai (5) s'effectue moyennant
- un réglage entre une pompe d'enceinte d'essai (4) servant à vider l'espace intérieur de l'enceinte d'essai (5) fermée et une pompe de récipient d'essai (6) servant à vider l'espace intérieur du récipient d'essai (1) et/ou
- une vanne de séparation (V7).

8. Procédé selon l'une des revendications précédentes, dans lequel le fluide d'essai est rempli dans le récipient d'essai (1) en provenance d'une source de fluide d'essai (3) sollicitée.

9. Procédé selon l'une des revendications précédentes, dans lequel le procédé est interrompu prématurément et le récipient d'essai (1) est évalué comme étant défectueux, dès que la concentration en fluide d'essai dépasse une limite de fuite prédéfinie (Limit3_LeakRate) dans l'enceinte d'essai (5).

10. Procédé selon l'une des revendications précédentes, dans lequel une concentration de fond en fluide d'essai est accrue dans l'enceinte d'essai (5), lorsqu'un taux de fuite de fond (LeakRate) atteint une valeur inférieure à une limite de fuite prédéfinie (Limit2_LeakRate) dans l'enceinte d'essai (5).

11. Procédé selon l'une des revendications précédentes, dans lequel la dépression dans le récipient d'essai (1) est fournie par le biais d'une conduite d'alimentation (L1), laquelle permet également de remplir le fluide d'essai dans le récipient d'essai (1).

12. Procédé selon l'une des revendications précédentes, dans lequel l'espace intérieur de l'enceinte d'essai (5) est rincé, après que du fluide d'essai a été détecté dans l'enceinte d'essai (5).

13. Procédé selon l'une des revendications précédentes, dans lequel une concentration de fond en fluide d'essai est réglée dans l'enceinte d'essai (5).

14. Dispositif d'essai (10 ; 20) servant à exécuter les étapes du procédé selon la revendication 1, comprenant
- une enceinte d'essai (5) pouvant être fermée de manière à être étanche aux fluides, dans laquelle le récipient d'essai (1) peut être disposé,
- une pompe d'enceinte d'essai (4) servant à vider l'espace intérieur de l'enceinte d'essai (5) fermée,
- une source de fluide d'essai (3), à partir de laquelle un fluide d'essai peut être rempli dans le récipient d'essai (1) disposé à l'intérieur de l'enceinte d'essai (5),
- un détecteur de fluide d'essai (2) servant à déceler du fluide d'essai dans l'espace intérieur de l'enceinte d'essai (5) et
- un raccord de pompe, par le biais duquel l'espace intérieur du récipient d'essai (1) disposé à l'intérieur de l'enceinte d'essai (5) peut être vidé, de sorte que la dépression dans le récipient d'essai (1) est conçue de manière à être inférieure à la dépression dans l'espace intérieur de l'enceinte d'essai (5) fermée, la différence de pression entre la dépression dans le récipient d'essai (1) et la dépression dans l'espace intérieur de l'enceinte d'essai (5) fermée s'élevant à plus de 0 millibar et atteignant au maximum 100 millibars.

15. Dispositif d'essai (10 ; 20) selon la revendication 14 doté une vanne de séparation (V7) entre l'espace intérieur du récipient d'essai (1) et l'espace intérieur de l'enceinte d'essai (5).

16. Utilisation du dispositif d'essai (10 ; 20) selon la revendication 14 ou 15 pour exécuter un essai d'intégrité sur un récipient d'essai souple (1) d'après le procédé selon l'une des revendications 1 à 13.
